# EUROPEAN PATENT APPLICATION

(11) **EP 4 681 585 A1**
(43) Date of publication of application: **21.01.2026**
(21) Application number: 23927145.5
(22) Date of filing: 14.11.2023
(51) Int. Cl.: A47J 43/08, H02P 1/16

(54) **LOW-NOISE PULVERIZING METHOD AND PULPING METHOD OF FOOD PROCESSOR**

(30) Priority: 15.03.2023 CN 202310267722
(71) Applicant: Joyoung Company Limited, Jinan, Shandong 250118 (CN)
(72) Inventor: WANG, Xuning, Jinan, Shandong 250118 (CN); HE, Jianping, Jinan, Shandong 250118 (CN); WU, Jialiang, Jinan, Shandong 250118 (CN); ZHANG, Wenfan, Jinan, Shandong 250118 (CN)
(74) Representative: advotec.
(86) International application number: PCT/CN2023/131481
(87) International publication number: WO 2024/187804

(57) **Abstract**

Provided is a kitchen appliance operating method, in particular, a low-noise pulverizing method and pulping method of a food processor. A method for pulverizing a material by using a pulverizing blade (4) in a single operation comprises: a material pushing stage, involving: controlling the pulverizing blade (4) to accelerate from 0 to a first rotating speed at a first angular acceleration, wherein the duration of the material pushing stage does not exceed 600 ms, and a mixture of the material and water is instantaneously pushed to move; a uniform acceleration stage, involving: controlling the pulverizing blade (4) to uniformly accelerate to a second rotating speed at a second angular acceleration, so as to drive the material to move in an accelerated manner, wherein the second angular acceleration is less than the first angular acceleration, and the second rotating speed is greater than the first rotating speed; and the constant-speed pulverizing stage, involving: controlling the pulverizing blade (4) to maintain the second rotating speed so as to pulverize the material. In the pulverizing method in the present invention, a single pulverizing process of a pulverizing blade (4) is controlled by means of a brushless electric motor (3), thereby achieving lower noise during a pulping process, especially the noise each time pulverizing is started.

## Description

This application claims the priority to Chinese Patent Application No. 202310267722.2, titled "LOW-NOISE CRUSHING METHOD AND SLURRY PREPARATION METHOD FOR FOOD PROCESSOR", filed on March 15, 2023 with the China National Intellectual Property Administration, which is incorporated herein by reference in its entirety.

### FIELD

The present disclosure relates to an operating method for kitchen appliances, and in particular to a low-noise crushing method and a slurry preparation method for a food processor.

### BACKGROUND

Both soybean milk makers and high-speed blenders generate noise during soybean milk production. According to the national standard (GB/T 26179-2010), A-weighted sound power level of noise generated by a soybean milk maker during normal operation should not exceed 80 dB. That is, during a slurry preparation process, a peak noise generated by a crushing blade performing steady-state crushing should not exceed 80 dB. The peak noise generated by the crushing blade performing the steady-state crushing is chosen to be restricted for two reasons, first, the duration in which the crushing blade performs the steady-state crushing is long, making the noise more noticeable to consumers; second, noise levels during steady-state crushing exhibit minimal fluctuation, allowing for more precise and stable test results. However, in real-world usage scenarios, consumers typically perceive loud slurry preparation noise during initial few seconds before the soybean milk maker reaches steady-state crushing, which can still substantially adversely impacts their physical and psychological experience.

Most conventional soybean milk makers use series-wound motors. The applicant has been engaged in the research and development of soybean milk makers for a long time. Through research, the applicant has discovered that the series-wound motors can only rotate unidirectionally. As a result, currents, voltages and position information of the motors cannot be evaluated or detected and diverse ingredients or loads cannot be intelligently recognized. Therefore, only a single, non-uniform and slow-start crushing pattern is available for the conventional soybean milk makers. With such crushing pattern, the crushing blades experience substantial resistance from ingredients during the initial operation stage, forcing the motor to operate under heavy load condition. When the load on the motor increases, on one hand, the motor body tends to develop high-frequency vibrations, inducing resonance at the same frequency of other components of the soybean milk maker, which results in significant resonant noise during initial few seconds of slurry preparation. On the other hand, when the load on the motor continuously increases in situations, for example, excessive ingredients are added by the consumer, a current of the motor increases; and if the current exceeds a limit value, the motor is prone to stalling, the crushing blade may be jammed, and the motor may even be burned out, shortening the service life of the soybean milk maker.

To address the issue of blade jamming and motor stalling of a food processor, the invention patent application No. CN201410074752.2 discloses a method utilizing the characteristics of a brushless motor. The invention employs a forward-reverse-forward rotation control sequence to loosen heavy-load blockages, thereby resolving blade jamming and motor stalling. The patent application No. CN201811009915.3 discloses a method for avoiding blade jamming and motor stalling through current control and reverse rotation control of the motor. Furthermore, the applicant of the present application had filed an invention patent application (No. CN201710659735.9 and titled Motor Starting Method for Soybean Milk Maker). The above application discloses a method of controlling the startup of a brushless motor based on preset stored startup parameters such as the number of total motor startup steps *n,* a duration *t* per motor step, and a current threshold *I0* per motor step. The method addresses issues of abnormal stalling and insufficient torque during startup of the motor, ensuring safe startup of the motor; in addition, a current is automatically adjusted based on the noise during startup of the motor, specifically, the current is reduced when noise is loud and increased when noise is low, thereby preventing motor burnout caused by current overload. The aforementioned patent applications leverage controllability characteristic of the brushless motor to address motor stalling and safety issues, however, the issue of loud noise perceived by consumers in the slurry preparation, particularly in an initial ingredient crushing stage, still remains to be addressed.

### SUMMARY

An object of the present disclosure is to provide a low-noise crushing method and a slurry preparation method for a food processor. With the method, each single crushing process of a crushing blade is controlled through a brushless motor, to reduce the noise in each stage of the ingredient crushing process performed by the crushing blade during a slurry preparation process. The method particularly reduces loud noise generated when the crushing blade starts to crush food ingredients each time, greatly improving use experience of consumers. In addition, through cyclically performing the crushing method throughout the slurry preparation process, the produced soybean milk is adequately smooth and rich.

To achieve the above object, a low-noise crushing method for a food processor is provided in the present disclosure, where the food processor uses a brushless motor to drive a crushing blade to crush a food ingredient. A single crushing process of the crushing blade during slurry preparation includes:
accelerating, in an ingredient pushing stage, the crushing blade from 0 to a first rotational speed at a first angular acceleration, where a duration of the ingredient pushing stage is controlled not to exceed 600 ms, to instantaneously push a mixture of the food ingredient and water to move;
uniformly accelerating, in a uniform acceleration stage, the crushing blade to a second rotational speed at a second angular acceleration, to drive the food ingredient to accelerate, where the second angular acceleration is less than the first angular acceleration and the second rotational speed is greater than the first rotational speed; and
controlling, in a constant-speed crushing stage, the crushing blade to keep rotating at the second rotational speed to crush the food ingredient.

Further, after the crushing blade is actuated and before the uniform acceleration stage, the crushing method includes a first deceleration stage in which the crushing blade decelerates from the first rotational speed to a third rotational speed.

Further, in the first deceleration stage, the crushing blade decelerates to the third rotational speed without any control being performed on the crushing blade.

Further, the brushless motor is in a de-energized state in the first deceleration stage.

Further, the third rotational speed is not 0; or,
the third rotational speed is at least 1/3 of the first rotational speed; or,
the third rotational speed ranges from 1000 rmp to 4000 rmp.

Further, a duration of the first deceleration stage ranges from 20 ms to 300 ms.

Further, a startup duration of the crushing blade from being actuated to entering the constant-speed crushing stage does not exceed 1/3 of a total duration of the single crushing process of the crushing blade.

Further, the first angular acceleration ranges from 1500 rad/s² to 6000 rad/s²; or,
the first rotational speed ranges from 2000 rmp to 6000 rmp according to different slurry preparation functions; or
the duration of the ingredient pushing stage ranges from 50 ms to 500 ms.

Further, the second angular acceleration ranges from 65.4 rad/s² to 628 rad/s²; or,
a duration of the uniform acceleration stage ranges from 2 s to 8 s.

Further, a crushing duration of the constant-speed crushing stage ranges from 10 s to 30 s; or,
the second rotational speed is an average rotational speed in the constant-speed crushing stage, and a maximum rotational speed and/or a minimum rotational speed in the constant-speed crushing stage fluctuates by no more than 1% with respect to the average rotational speed.

In addition, a slurry preparation method for a food processor is provided in the present disclosure, including:
cyclically performing, in a crushing stage, the crushing method to crush the food ingredient to prepare slurry; and
heating the prepared slurry in a heating stage.

For a conventional soybean milk maker, whether using a series-wound motor or a brushless motor, the manufacturer primarily focuses on adjusting motor performance, installation structures of the components, the slurry preparation process and the like based on national standard requirements, to reduce the noise level generated in the steady-state crushing during the slurry preparation process. However, the issue that consumers also perceive loud crushing noise in a startup stage of each crushing process is overlooked. The crushing method provided in the present disclosure leverages the controllability characteristic of the brushless motor to regulate each single crushing process of the crushing blade during the slurry preparation so that the slurry preparation noise perceived by consumers throughout the single crushing process, even in the startup stage of the crushing blade, is reduced. Furthermore, adequately smooth and rich slurry beverage can be produced by cyclically performing the crushing method provided in the present disclosure in the slurry preparation process.

In the ingredient pushing stage according to the present disclosure, a crushing blade is accelerated from 0 to a first rotational speed at a first angular acceleration. Through research, the inventors found that the smaller the first angular acceleration, the weaker the instantaneous force for pushing food ingredients, and thus blade jamming may occur when processing hard food ingredients or due to ingredients buildup. By contrast, an excessively high first angular acceleration causes excessive instantaneous force exerted by the crushing blade to push food ingredients, resulting in excessive reactive force (that is, load) on the crushing blade from the food ingredients. In such case, same-frequency resonance noise is prone to be generated in the food processor. In the ingredient pushing stage according to the present disclosure, it is required to stir up the food ingredients within a duration not exceeding 600 ms. Although an instantaneous load borne by the crushing blade within the duration is large, high resonance noise that may be generated in the food processor due to the large instantaneous load hardly imposes significant noise impact on consumers in such short duration.

Through research, the inventors have found that, at a first angular acceleration ranging from 1500 rad/s² to 6000 rad/s², the crushing blade can stir up food ingredient particles (such as soybeans, peanuts, black beans and other bean ingredients) with an average diameter within 20 mm at a low probability of blade jamming. Furthermore, the first angular acceleration would not be too large to control rotational inertia of the crushing blade, thereby avoiding the liquid splashing issue induced by instantaneous overspeed during startup and exerting only unobvious noise impact on the consumers. Further, the inventors found that once the food ingredients are stirred up to move, the resistance borne by the crushing blade when continuously pushing the food ingredients is reduced (that is, the load is reduced), significantly reducing the probability of generating resonant noise in the food processor. Therefore, in a single crushing process according to the present disclosure, food ingredients are stirred up to move in the ingredient pushing stage, creating conditions for the crushing blade to crush the food ingredients with a low crushing noise.

In the uniform acceleration stage according to the present disclosure, the crushing blade is controlled to be uniformly accelerated to a second rotational speed at a second angular acceleration which is smaller than the first angular acceleration, where the second rotational speed is greater than the first rotational speed. In this stage, the crushing blade is in a uniform acceleration process. Compared with conventional soybean milk makers and high-speed blenders with variable acceleration, the acceleration process of the food processor according to the present disclosure is smoother, the motor acceleration sound is softer, and the acceleration process has no sharp or harsh noise and is more acceptable for consumers. Furthermore, in this stage, the food ingredients are continuously pushed by the uniformly accelerated crushing blade to accelerate, reducing the relative movement between the food ingredients and the crushing blade. Therefore, compared with conventional crushing startup pattern through variable acceleration, the method according to the present disclosure features fewer chaotic collisions of food ingredients in this stage, resulting in lower collision noise.

In addition, when the crushing blade is accelerated to reach the second rotational speed, the food ingredients also have a high initial movement speed. The higher the initial movement speed of the food ingredients, the lower the load on the crushing blade during crushing, resulting in reduced resonance noise level. Therefore, the uniform acceleration stage according to present disclosure ensures that the crushing blade, after entering the constant-speed crushing stage (that is, the crushing blade operates in the steady state), crushes the food ingredients under a low load. Compared with the steady-state crushing in the slurry preparation process of conventional food processors, the crushing blade is controlled to crush the food ingredients at a constant rotational speed throughout the constant-speed crushing stage according to the present disclosure. Therefore, the crushing process will not produce fluctuating noises caused by acceleration or deceleration, resulting in more stable slurry preparation with reduced risk of slurry splashing.

### BRIEF DESCRIPTION OF THE DRAWINGS

The present disclosure is further described below in conjunction with the accompanying drawings.
FIG. 1 is a schematic view showing the structure of a food processor according to the present disclosure;
FIG. 2 is a flowchart of a single crushing process performed by a crushing blade during slurry preparation; and
FIG. 3 is a diagram showing a crushing curve of a single crushing process of a crushing blade.

### DETAILED DESCRIPTION

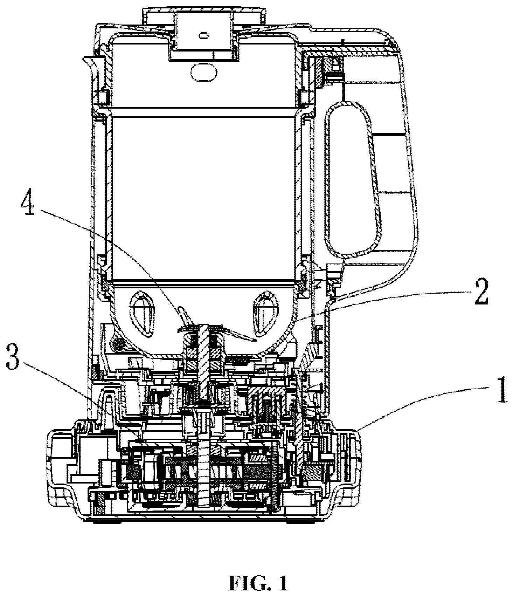

FIG. 1 is a schematic view showing the structure of a food processor according to an embodiment of the present disclosure. The food processor includes a base 1 and a crushing cup 2. A brushless motor 3 is mounted in the base 1. A crushing blade 4 is arranged in the crushing cup 2, and the crushing blade 4 is driven by the brushless motor 3 to rotate for crushing food ingredients.

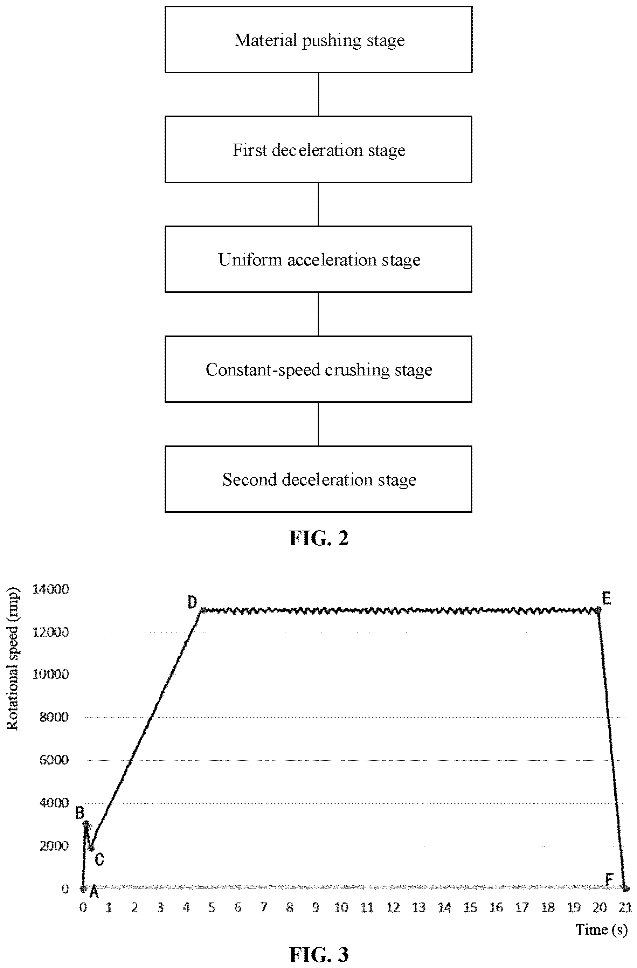

The food processor described in the embodiment has a variety of production functions. A low-noise crushing method for the food processor according to the present disclosure is described hereinafter by taking soybean milk making as an example. FIG. 2 is a flowchart showing a single crushing process among N times of crushing processes performed by a crushing blade during slurry preparation by the food processor according to the present disclosure. FIG. 3 is a diagram showing a crushing curve of a single crushing process of a crushing blade.

In a single crushing process, the crushing blade is configured to operate in the following stages.

An ingredient pushing stage (A to B), where the crushing blade is controlled to accelerate from 0 to a first rotational speed n1=3000 rmp at a first angular acceleration α1=3140 rad/s². A duration of the ingredient pushing stage t1 is 100 ms (t1 does not exceed 600 ms), and thus a mixture of food ingredients and water is instantaneously pushed to move.

A first deceleration stage (B to C), where the crushing blade is controlled to decelerate from the first rotational speed n1=3000 rmp to a third rotational speed n3=2000 rmp to make the crushing blade not move in synchronization with the food ingredients.

A uniform acceleration stage (C to D), where the crushing blade is controlled to uniformly accelerate to a second rotational speed n2=13000 rmp at a second angular acceleration α2=340 rad/s² to drive the food ingredients to accelerate. The second angular acceleration α2 is less than the first angular acceleration α1, and the second rotational speed n2 is greater than the first rotational speed n1.

A constant-speed crushing stage (D to E), where the crushing blade is controlled to continuously crush the food ingredients at a constant speed.

A second deceleration stage (E to F), where the crushing blade is controlled to decelerate to 0 to complete the single crushing process.

Through research, the inventors found that, in the crushing stage during a slurry preparation process, by cyclically performing the above crushing method, the slurry preparation noise generated during each single crushing process performed by the crushing blade is low, where the average noise is substantially 69 dB or less. Furthermore, the slurry preparation noise perceived by consumers is low throughout the slurry preparation process, whether during initial crushing when the crushing blade is started up or during constant-speed crushing when the crushing blade operates at a constant speed in a steady state. In addition, the slurry produced using the method according to the present disclosure is smooth and rich after being well-cooked by heating.

The reason why consumers have the above experience is that, in the ingredient pushing stage according to the embodiment, the crushing blade is accelerated from 0 to the first rotational speed n1 at the first angular acceleration α1. Through research, the inventors have found that the smaller the first angular acceleration α1, the weaker the instantaneous force for pushing food ingredients, and thus blade jamming may occur when processing hard food ingredients or due to ingredients buildup. By contrast, an excessively high first angular acceleration α1 causes excessive instantaneous force exerted by the crushing blade to push the food ingredients, resulting in excessive reactive force (that is, load) on the crushing blade from the food ingredients. In such case, same-frequency resonance noise is prone to be generated in the food processor. In the ingredient pushing stage according to the embodiment, the crushing blade is accelerated from 0 to the first rotational speed n1 within a short duration, and a mixture of the food ingredients and water is stirred up to move within 100 ms. Although an instantaneous load borne by the crushing blade within the duration is large, high resonance noise that may be generated in the food processor due to the large instantaneous load hardly imposes significant noise impact on consumers in such short duration. Furthermore, the inventors found that once the food ingredients are stirred up to move, the resistance borne by the crushing blade when continuously pushing the food ingredients is reduced (that is, the load is reduced), significantly reducing the probability of generating resonant noise in the food processor. Therefore, in a single crushing process according to the present disclosure, the mixture of food ingredients and water is stirred up to move in the ingredient pushing stage, creating conditions for the crushing blade to crush the food ingredients with a low crushing noise.

In the uniform acceleration stage according to the embodiment, the crushing blade is controlled to be uniformly accelerated to the second rotational speed n2 at the second angular acceleration α2which is smaller than the first angular acceleration α1, where the second rotational speed n2 is greater than the first rotational speed n1. In this stage, the crushing blade is in a uniform acceleration process. Compared with conventional soybean milk makers and high-speed blenders with variable acceleration, the acceleration process of the food processor according to this embodiment is smoother, the motor acceleration sound is softer, and the acceleration process has no sharp or harsh noise and is more acceptable for consumers. Furthermore, in this stage, the food ingredients are continuously pushed by the uniformly accelerated crushing blade to accelerate, reducing the relative movement between the food ingredients and the crushing blade. Therefore, compared with the conventional crushing startup pattern through variable acceleration, the method according to this embodiment features fewer chaotic collisions of food ingredients in this stage, leading to lower collision noise.

In the embodiment, the first deceleration stage is provided after the ingredient pushing stage and before the uniform acceleration stage. In the first deceleration stage, the crushing blade is controlled to decelerate from the first rotational speed n1 to the third rotational speed n3, mainly for reducing the load on the crushing blade in the uniform acceleration stage. As aforementioned, the main purpose of the ingredient pushing stage is to instantaneously stir up the mixture of food ingredients and water in an extreme short duration to move. The reason is that for the food ingredients that being in movement, smaller force is needed to be applied by the force-applying object (i.e., the crushing blade), which consequently reduces the reactive force (load) on the force-applying object (i.e., the crushing blade). If continuous force is applied to accelerate the food ingredients immediately after initial stir-up, the crushing blade may bear significant load in the uniform acceleration stage due to ingredient buildup during movement. If being subjected to substantial crushing load, the crushing blade is prone to jamming or stalling, potentially leading to motor burnout due to increased current. Furthermore, in the uniform acceleration stage, the second angular acceleration α2 of the crushing blade is significantly less than the first angular acceleration α1, and the target rotational speed after uniform acceleration is substantially greater than the first rotational speed n1. Therefore, a duration t2 of the uniform acceleration stage is significantly longer than the duration t1 of the ingredient pushing stage. As aforementioned, resonance noise generated by continuous crushing under heavy load for a duration (exceeding 600 ms) may cause sensory discomfort to consumers. Therefore, in the embodiment, ensure operational safety and further mitigate this risk, the first deceleration stage is provided for the crushing blade before the uniform acceleration stage so that the food ingredients move asynchronously with the rotation of the crushing blade, which reduces slurry preparation noise in the uniform acceleration stage while enhancing motor operational safety.

In addition, when the crushing blade is accelerated to reach the second rotational speed n2, the food ingredients also have a high initial movement speed. The higher the initial movement speed of the food ingredients, the lower the load on the crushing blade during crushing, resulting in reduced resonance noise level. Therefore, the uniform acceleration stage according to present disclosure ensures that the crushing blade, after entering the constant-speed crushing stage (that is, the crushing blade operates in the steady state), crushes the food ingredients under a low load. Compared with the steady-state crushing in the slurry preparation process of conventional food processors, the crushing blade is controlled to crush the food ingredients at a constant rotational speed throughout the constant-speed crushing stage according to the present disclosure. Therefore, the crushing process will not produce fluctuating noises caused by acceleration or deceleration, resulting in more stable slurry preparation with reduced risk of slurry splashing.

It should be noted that, for the ingredient pushing stage according to this embodiment, the duration t1 is required not to exceed 600 ms. Through research, the inventors found that the smaller t1, the less impact of the initial crushing noise perceived by consumers when the crushing blade is started up and that the impact of the noise perceived by consumers is enhanced as t1 increases. Through repeated debugging and verification, the inventors found that the impact of instantaneous noise generated in the ingredient pushing stage during slurry preparation by the food processor according to the present disclosure is acceptable for most consumers when the duration of the ingredient pushing stage is controlled not to exceed 600 ms. In a case that t1 exceeds 600 ms, the impact of the noise on eardrums in the ingredient pushing stage is unacceptable for most consumers.

A research was conducted by the inventors on the food processor according to the present application as shown in Table 1. In the ingredient pushing stage during soybean milk making, a crushing blade was accelerated from 0 to n1=3000 rmp under different first angular accelerations α1. The table lists phenomena when the crushing blade was instantly started to crush wet soybeans. 10 tests were respectively performed for each α1 value. Due to the short duration of the test process, it's hard for instruments to accurately detect the noise levels. Therefore, the inventors conducted the research on whether 10 participants consider the noise during the tests acceptable.

**Table 1 Comparison of phenomena occurring when the crushing blade is accelerated to n1 at different α1**

| No. | First Angular Acceleration α1 (rad/s²) | Blade Jamming Probability (in 10 Tests) | Liquid Splashing Probability (in 10 Tests) | Noise Perception (10 Participants) |
|---|---|---|---|---|
| 1 | 1200 | blade jamming occurred 3 times | 0 | acceptable for 10 participants |
| 2 | 1300 | blade jamming occurred 1 time | 0 | acceptable for 10 participants |
| 3 | 1400 | blade jamming occurred 1 time | 0 | acceptable for 10 participants |
| 4 | 1500 | 0 | 0 | acceptable for 10 participants |
| 5 | 2000 | 0 | 0 | acceptable for 10 participants |
| 6 | 3000 | 0 | 0 | acceptable for 10 participants |
| 7 | 4000 | 0 | 0 | acceptable for 10 participants |
| 8 | 5000 | 0 | 0 | acceptable for 10 participants |
| 9 | 6000 | 0 | 0 | unacceptable for 1 participant |
| 10 | 6500 | 0 | splashing occurred 3 times | unacceptable for 1 participant |
| 11 | 7000 | 0 | splashing occurred 5 times | unacceptable for 3 participants |
| 12 | 8000 | 0 | splashing occurred 6 times | unacceptable for 4 participants |

The research shows that when the first angular acceleration α1 is less than 1500 rad/s², the acting force applied by the crushing blade to food ingredients is insufficient and the crushing blade may be jammed. Therefore, the mixture of the food ingredients and water may not be stirred up to move, and the brushless motor may be burned out. When the first angular acceleration α1 is greater than 6000 rad/s², the crushing blade has a large rotational inertia and the rotational speed of the crushing blade is difficult to control. Therefore, the crushing blade may overspeed during instantaneous startup, possibly causing liquid splashing and safety risk of scalding of users. Moreover, when the first angular acceleration α1 exceeds 6000 rad/s², the rotational speed of the crushing blade would greatly exceed the predetermined n1 due to inertia and thus the reactive force exerted by the food ingredients on the crushing blade is large, easily causing resonance noise due to instantaneous load increase on the crushing blade. This resonance noise is unacceptable for some users. As perception of noise varies among users, the inventors determine a criterion that noise impact that is acceptable for 90% or more of the users meets the requirement. Therefore, the first angular acceleration α1 according to the present disclosure is determined to range from 1500 rad/s² to 6000 rad/s². The inventors have found in multiple times of verifications that, with the first angular acceleration being in the above range, food ingredient particles (such as soybeans, peanuts, black beans and other bean ingredients) with an average diameter of 20 mm or less can be stirred up to move, and the probability of blade jamming is very small. Furthermore, the first angular acceleration α1 is not excessively high and would not cause uncontrollable rotational inertia of the crushing blade, thereby avoiding the liquid splashing issue induced by instantaneous startup rotational speed exceeding a predetermined value. Further, when the crushing blade is started under the first angular acceleration α1 to crush the food ingredients, the impact of noise generated at the instant the crushing blade starts is unnoticeable to 90% or more of the users. It should be noted that the first angular acceleration α1 in the ingredient pushing stage according to the present disclosure is an average angular acceleration of the ingredient pushing stage.

For the food processor in this embodiment, in the ingredient pushing stage, the first rotational speed n1 is preferably controlled within a range from 2000 rmp to 6000 rmp. The higher the first rotational speed n1, the more difficult it is to control the rotational speed of the crushing blade due to inertia force after the crushing blade is started, posing a risk of overspeed. The food processor according to this embodiment has various functions, and the first rotational speed n1 may be determined within the above preferred range according to different slurry preparation functions. Of course, the food processor according to this embodiment can also be used for crushing solid food ingredients, such as smoothie making and dry pulverization, in this case, a higher first rotational speed n1 may be chosen, for example, in the range of 6000 rmp to 8000 rmp. For smoothie making and dry pulverization, although the requirement on noise is lower compared with the slurry preparation function, the crushing method according to the present disclosure can still be applied to further decrease the noise. In addition, liquid splashing can be avoided with a high rotational speed. Furthermore, for the crushing method according to the embodiment, the duration t1 of the ingredient pushing stage is controlled to be in a range from 50 ms to 500 ms. To sufficiently mitigate the noise impact on the consumers at the instant when the crushing blade is started, in the ingredient pushing stage, the shorter the duration of t1, the better. However, an excessively short t1 leads to an excessively high first angular acceleration α1, causing liquid splashing when the crushing blade is started. The excessively short t1 also results in failure of stirring up the mixture of food ingredients and water. Therefore, t1 is preferably in a range of 80 ms to 200 ms.

In the uniform acceleration stage according to this embodiment, the crushing blade is accelerated at the second angular acceleration α2 to push the food ingredients until the rotational speed of the crushing blade reaches the second rotational speed n2. The inventors have found that the second angular acceleration α2 in the uniform acceleration stage is in a certain relationship with a rotational speed increment (that is, a difference between the rotational speed at the end of the stage and the rotational speed at the beginning of the stage) of the crushing blade in the stage. That is, the requirement on the second angular acceleration α2 varies with the rotational speed increment.

As shown in Table 2, research is performed on the food processor according to the present disclosure. Table 2 shows physical phenomena when the crushing blade is accelerated from n3=4000 rmp to n2=9000 rmp at different second angular accelerations α2 in the uniform acceleration stage of soybean milk making.

**Table 2 Comparison of experimental phenomena of the crushing blade being accelerated to n2 at different α2 values**

| No. | Second Angular Acceleration α2 (rad/s²) | Duration t2 (s) | Detected Noise (dB) | Blade Jamming Probability (in 10 Tests) |
|---|---|---|---|---|
| 1 | 34.9 | / | 60 | blade jamming occurred 4 times |
| 2 | 43.6 | / | 60 | blade jamming occurred 5 times |
| 3 | 52.3 | 10 | 61 | blade jamming occurred 2 times |
| 4 | 65.4 | 8 | 62 | 0 |
| 5 | 104.7 | 5 | 61 | 0 |
| 6 | 130.8 | 4 | 64 | 0 |
| 7 | 174.4 | 3 | 66 | 0 |
| 8 | 261.7 | 2 | 65-68 | 0 |
| 9 | 523.3 | 1 | acceptable | 0 |
| 10 | 654.2 | 0.8 | perceived but cannot be detected | 0 |

Through the above research, the inventors found that blade jamming was prone to occur when the second angular acceleration α2 is low, and the crushing blade was no longer jammed when α2≥65.4rad/s².

In addition, the inventors have conducted another research. Table 3 shows physical phenomena when the crushing blade is accelerated from n3=2000 rmp to n2=14000 rmp at different second angular accelerations α2 in the uniform acceleration stage of soybean milk making.

**Table 3 Comparison of experimental phenomena of the crushing blade being accelerated to n2 at different α2 values**

| No. | Second Angular Acceleration α2 (rad/s²) | Duration t2 (s) | Detected Noise (dB) | Liquid Splashing Probability (in 10 Tests) |
|---|---|---|---|---|
| 1 | 83.7 | 15 | 61 | 0 |
| 2 | 104.7 | 12 | 62 | 0 |
| 3 | 125.6 | 10 | 62 | 0 |
| 4 | 157 | 8 | 64 | 0 |
| 5 | 254.2 | 5 | 63 | 0 |
| 6 | 314 | 4 | 64 | 0 |
| 7 | 418.7 | 3 | 66 | 0 |
| 8 | 628 | 2 | 68-71 | splashing occurred 1 time |
| 9 | 1256 | 1 | 70-74 | splashing occurred 2 times |
| 10 | 1570 | 0.8 | Perceived but cannot be detected | splashing occurred 4 times |

According to the above research, there's no blade jamming when α2 is controlled to be greater than 83.7 rad/s². However, liquid splashing occurs when α2 is greater than 628 rad/s². As the value of α2 increases, not only does the amount of liquid splash rise, but the noise perceived by the experimental personnel also becomes more noticeable.

It can be seen that, various slurry preparation issues may be caused due to different states of food ingredients and different second angular accelerations α2 for driving the food ingredients to accelerate during uniform acceleration stage of the food ingredients.

The duration of the uniform acceleration stage according to the embodiment is represented by t2, where α2t2=(n2-n3)π/30. For the food processor described in the embodiment, in a single slurry preparation process, the crushing blade rotates approximately 10 to 20 times and a total duration of a single ingredient crushing process of the crushing blade generally does not exceed 35s. A long total duration of single ingredient crushing process means a long operating duration of the brushless motor in the single ingredient crushing process, impairing heat dissipation of the brushless motor. As a result, a temperature rise of the brushless motor is large due to the prolonged continuous operation, which leads to the risks of motor burnout on one hand and overflow of the slurry due to more friction heat (or motor heat) absorbed on the other hand. For the crushing method for the food processor according to the embodiment, an excessively long duration t2 of the uniform acceleration stage causes a duration of the subsequent constant-speed crushing stage difficult to control. That is, if t2 is increased while the duration of the constant-speed crushing stage is shortened to ensure that the duration of the slurry preparation process remains unchanged, crushing fineness of the food ingredients is unsatisfied. If t2 is increased while the duration of the subsequent constant-speed crushing stage is not shortened, the slurry preparation process has to be prolonged to ensure the slurry quality, possibly posing safety risks of motor burnout or slurry overflow.

Therefore, for the crushing method for the food processor according to the embodiment, regardless of the rotational speed increment, it is required that the duration t2 of the uniform acceleration stage be preferably in the range from 2 s to 8 s and the second angular acceleration α2 be preferably in the range from 65.4 rad/s² to 628 rad/s². Considering both the slurry preparation performance and noise, the inventors have found that the duration of the uniform acceleration stage is more preferably in the range from 3 s to 5 s and the second angular acceleration α2 is more preferably in the range from 104.7 rad/s² to 418.7 rad/s².

It should be noted that, for the crushing method for the food processor according to the embodiment, the crushing blade may be controlled to decelerate from the first rotational speed n1 to the third rotational speed n3 in various ways in the first deceleration stage. For example, a control system de-energizes the brushless motor to cause the crushing blade to automatically decelerate to n3, without actively applying an acting force to the crushing blade. Alternatively, the control system slowly decelerates the crushing blade to n3. Of course, in this embodiment, the crushing blade is not allowed to decelerate to 0 in the first deceleration stage, otherwise, the effect achieved during the ingredient pushing stage would be entirely negated, as the food ingredients have to be instantly stirred up again to move to ensure subsequent low-noise crushing. Through research, the inventors have found that the third rotational speed n3 is generally controlled to be at least 1/3 of the first rotational speed n1. Or, the third rotational speed n3 is controlled to be in the range from1000 rmp to 4000 rmp depending on the different functions of the food processor. The duration t3 of the first deceleration stage may be determined based on different control methods. The duration t3 of the first deceleration stage according to this embodiment is preferably in the range from 20 ms to 300 ms. In overall consideration of the slurry preparation efficiency and noise impact, t3 is more preferably in the range from 20 ms to 100 ms in this embodiment. According to this embodiment, the first deceleration stage is provided before the uniform acceleration stage, which not only makes the crushing blade more controllable and does not overspeed due to inertia, but also makes the crushing blade move asynchronously with the food ingredients, preparing for the control over rotation of the crushing blade subsequently entering the uniform acceleration stage and creating conditions for continuously maintaining low slurry preparation noise during subsequent crushing. Of course, in a controllable state where the first angular acceleration α1 is low, the crushing blade may be controlled to directly enter the uniform acceleration stage upon the end of the ingredient pushing stage and then accelerate to the second rotational speed n2 at the second angular acceleration α2.

As aforementioned, the duration of a single ingredient crushing process of the crushing blade is about 35 s. In this embodiment, the duration of the constant-speed crushing stage is preferably in the range from 10 s to 30 s. If excessively long time is consumed before the constant-speed crushing stage, the time for the constant-speed crushing stage in which the food ingredients are sufficiently crushed would be reduced. Based on comprehensive research into slurry preparation performance, beverage quality, safety and the like, the inventors found that when the startup duration, from the initial operation of the crushing blade until it enters the constant-speed crushing stage, does not exceed 1/3 of the total duration of a single crushing process of the crushing blade, the food processor can achieve significantly reduced noise levels for consumers while maintaining slurry preparation performance, beverage quality, and safety compared to conventional food processors. Even the noise perceived during startup of the crushing blade is noticeably lower.

Furthermore, for the slurry preparation method for the food processor according to the present disclosure, in the process that the above crushing method is cyclically performed, control parameters for each stage in the crushing process may be different or identical between two adjacent crushing processes within the above-described ranges, which can be determined by designers according to needs.

It should be noted that the food processor in this embodiment employs the brushless motor to drive the crushing blade to rotate for ingredient crushing. In the constant-speed crushing stage, the brushless motor exhibits superior rotational stability, enabling precise control over the rotational speed of the crushing blade. The inherent controllability of the brushless motor serves as the foundation for implementing the low-noise crushing method according to the present disclosure. In a practical slurry preparation process, the rotational speed of the crushing blade is not fixed but fluctuates within a certain range. For the constant-speed crushing stage according to this embodiment, the second rotational speed n2 is an average rotational speed in the constant-speed crushing stage, and a maximum rotational speed and/or a minimum rotational speed of the crushing blade fluctuates by no more than 1% with respect to the average rotational speed. Similarly, all other rotational speeds described in the embodiment fluctuate by no more than 1%. It should also be noted that the crushing method according to the present disclosure is not limited to the crushing stage, instead, the crushing method may also be applied in ingredient stirring stages for rough crushing.

The food processor according to the present disclosure may be arranged with a top-mounted motor, for example, a soybean milk maker, may be arranged with a bottom-mounted motor, for example, a high-speed blender, or may be a multi-functional food processor integrating a motor and a crushing cup. Furthermore, the food processor may be provided with automated features such as automatic water filling, automatic slurry discharging, and self-cleaning (hands-free cleaning).

Those skilled in the art should understand that the present disclosure includes but is not limited to the content described in the drawings and the above specific embodiments. Any modifications that do not deviate from functions and structural principles of the present disclosure are included in the scope of the claims.

## Claims

1. A low-noise crushing method for a food processor, the food processor being configured to use a brushless motor to drive a crushing blade to crush a food ingredient, wherein a single crushing process of the crushing blade during slurry preparation comprises:
accelerating, in an ingredient pushing stage, the crushing blade from 0 to a first rotational speed at a first angular acceleration, wherein a duration of the ingredient pushing stage is controlled not to exceed 600 ms, to instantaneously push a mixture of the food ingredient and water to move;
uniformly accelerating, in a uniform acceleration stage, the crushing blade to a second rotational speed at a second angular acceleration, to drive the food ingredient to accelerate, wherein the second angular acceleration is less than the first angular acceleration and the second rotational speed is greater than the first rotational speed; and
controlling, in a constant-speed crushing stage, the crushing blade to keep rotating at the second rotational speed to crush the food ingredient.

2. The low-noise crushing method for the food processor according to claim 1, wherein after the crushing blade is actuated and before the uniform acceleration stage, the crushing method further comprises a first deceleration stage in which the crushing blade decelerates from the first rotational speed to a third rotational speed.

3. The low-noise crushing method for the food processor according to claim 2, wherein in the first deceleration stage, the crushing blade decelerates to the third rotational speed without any control being performed on the crushing blade.

4. The low-noise crushing method for the food processor according to claim 2, wherein the brushless motor is in a de-energized state in the first deceleration stage.

5. The low-noise crushing method for the food processor according to claim 2, wherein
the third rotational speed is not 0; or,
the third rotational speed is at least 1/3 of the first rotational speed; or,
the third rotational speed ranges from 1000 rmp to 4000 rmp.

6. The low-noise crushing method for the food processor according to claim 2, wherein a duration of the first deceleration stage ranges from 20 ms to 300 ms.

7. The low-noise crushing method for the food processor according to claim 1, wherein a startup duration of the crushing blade from being actuated to entering the constant-speed crushing stage does not exceed 1/3 of a total duration of the single crushing process of the crushing blade.

8. The low-noise crushing method for the food processor according to claim 1, wherein
the first angular acceleration ranges from 1500 rad/s² to 6000 rad/s²; or,
the first rotational speed ranges from 2000 rmp to 6000 rmp according to different slurry preparation functions; or,
the duration of the ingredient pushing stage ranges from 50 ms to 500 ms.

9. The low-noise crushing method for the food processor according to claim 1, wherein
the second angular acceleration ranges from 65.4 rad/s² to 628 rad/s²; or,
a duration of the uniform acceleration stage ranges from 2 s to 8 s; or,
a crushing duration of the constant-speed crushing stage ranges from 10 s to 30 s; or,
the second rotational speed is an average rotational speed in the constant-speed crushing stage, and a maximum rotational speed and/or a minimum rotational speed in the constant-speed crushing stage fluctuates by no more than 1% with respect to the average rotational speed.

10. A slurry preparation method for a food processor, comprising:
cyclically performing, in a crushing stage, the crushing method according to any one of claims 1 to 9 to crush the food ingredient to prepare slurry; and
heating the prepared slurry in a heating stage.
